# EUROPÄISCHE PATENTANMELDUNG

(11) **EP 4 163 190 A1**
(43) Veröffentlichungstag der Anmeldung: **12.04.2023**
(21) Anmeldenummer: 21201278.5
(22) Anmeldetag: 06.10.2021
(51) Int. Cl.: B62D 25/00, B62D 29/00

(54) **SYSTEM EINES GEDÄMMTEN STRUKTURELEMENTES**

(71) Anmelder: Sika Technology AG, 6340 Baar (CH)
(72) Erfinder: Lindgren, Henrik, 7181 Feluy (BE); Bautista, Jose, 5620 Bremgarten (CH); Fuhrmann, Bernd, 86381 Krumbach (DE); Unruh, Oliver, 55576 Sprendlingen (DE)
(74) Vertreter: Sika Patent Attorneys

(57) **Zusammenfassung**

Ein System eines gedämmten Strukturelementes in einem Kraftfahrzeug umfasst ein Strukturelement und zwei Dämmelemente. Die beiden Dämmelemente umfassen jeweils eine Wand und ein expandiertes Material, welches zumindest eine Seite dieser Wand vollständig bedeckt.

## Beschreibung

Die Erfindung betrifft ein System eines gedämmten Strukturelementes in einem Kraftfahrzeug.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

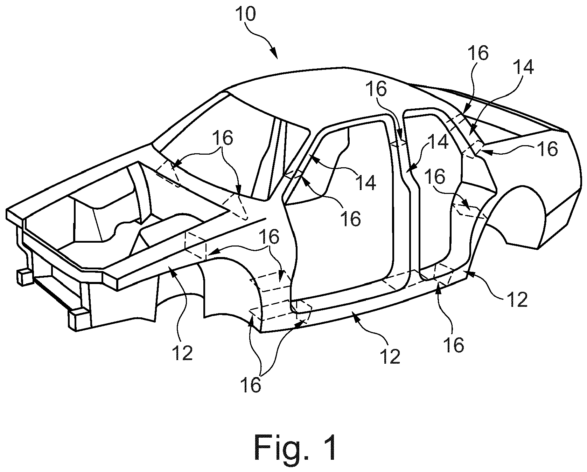

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Nachteilig an den bisher bekannten Abdichtungselementen ist es, dass diese spezifisch ausgelegt sind für Kraftfahrzeuge mit Verbrennungsmotoren. Dadurch ist eine Eignung solcher bekannter Abdichtungselemente für Kraftfahrzeuge mit alternativen Antrieben, insbesondere für elektrisch angetriebene Kraftfahrzeuge, nicht zwangsläufig gegeben.

Es ist daher eine Aufgabe der vorliegenden Erfindung, Abdichtungslösungen zur Verfügung zu stellen, welche auch für Kraftfahrzeuge mit alternativen Antriebssystemen, insbesondere für elektrisch angetriebene Kraftfahrzeuge, gute Ergebnisse erzielen.

Diese Aufgabe wird zunächst gelöst durch ein System eines gedämmten Strukturelementes in einem Kraftfahrzeug, das System umfassend: ein Strukturelement, welches einen Hohlraum bildet und welches sich entlang einer Längsachse erstreckt; ein erstes Dämmelement, welches zumindest einen Träger und ein expandiertes Material umfasst, wobei der Träger zumindest eine Wand umfasst, welche auf zumindest einer Seite vollständig mit expandiertem Material bedeckt ist; ein zweites Dämmelement, welches zumindest einen Träger und ein expandiertes Material umfasst, wobei der Träger zumindest eine Wand umfasst, welche auf zumindest einer Seite vollständig mit expandiertem Material bedeckt ist; wobei eine Distanz A zwischen der Wand des ersten Dämmelementes und der Wand des zweiten Dämmelementes, gemessen in Richtung der Längsachse des Strukturelementes, höchstens 400 mm beträgt.

Diese Lösung hat den Vorteil, dass dadurch insbesondere Kraftfahrzeuge mit alternativen Antriebssystemen, wie beispielsweise elektrisch angetriebene Fahrzeuge, zufriedenstellend akustisch gedämmt werden können. In Versuchen hat sich herausgestellt, dass eine solche Lösung mit zwei hintereinander angeordneten Dämmelementen eine deutlich bessere akustische Abdämmung von Strukturelementen erzielt, als dies bei der Verwendung eines einzelnen Dämmelementes der Fall war.

Dieser Effekt ist besonders relevant bei Schallwellen mit höheren Frequenzen, welche insbesondere bei elektrisch angetriebenen Fahrzeugen auftreten.

Ein weiterer Vorteil der hier vorgeschlagenen Lösung besteht darin, dass dadurch eine vergleichbare akustische Abdämmung erzielt werden kann wie durch zweikomponentige Polyurethanschäume, dass aber durch die Verwendung von Bafflen eine deutlich vereinfachte Handhabung und Applikation des Dämmsystems gegeben ist. Diese vorgeschlagenen Dämmelemente können bereits vor einer Tauchlackierung der Karosserie in den Strukturelementen angebracht werden, wobei sie nach der Lackierung im Einbrennofen expandiert werden. Bei zweikomponentigen Polyurethanschäumen ist eine Anwendung auch die Voraussetzung an die Ausrüstung deutlich komplexer und aufwendiger.
Zudem haben die zweikomponentigen Schäume den Nachteil, dass die auszuschäumenden Räume durch geeignete Blocker abgegrenzt werden müssen. Dies bedingt wiederum einen höheren Montage- und Arbeitsaufwand.

Die hier vorgeschlagene Lösung bietet insbesondere den Vorteil, dass durch das Anordnen von zwei hintereinander angeordneten Dämmelementen eine besonders gute akustische Dämmleistung für Luftschallwellen in einem Frequenzbereich zwischen 500 und 3000 Hz erzielt werden kann. Da dieser Frequenzbereich insbesondere bei elektrisch betriebenen Kraftfahrzeugen gehäuft auftritt, eignet sich die hier vorgeschlagene Lösung besonders für Anwendungen in Fahrzeugen mit alternativen Antriebssystemen.

Die Bezeichnung "Dämmelement" bzw. "Dämmung" bzw. "gedämmt" umfasst im Zusammenhang mit dieser Erfindung Elemente bzw. Strukturen bzw. Verfahrensschritte zur Abschottung und/oder Verschliessung und/oder Dämmung eines Strukturelementes. Diese verschiedenen Eigenschaften eines solchen Dämmelementes können dabei einzeln oder aber in Kombination miteinander auftreten.

In einer beispielhaften Ausführungsform beträgt die Distanz A höchstens 400 mm, insbesondere höchstens 300 mm, insbesondere höchstens 250 mm, insbesondere höchstens 200 mm.

In einer beispielhaften Ausführungsform beträgt eine kürzeste Distanz B zwischen der Wand und/oder des expandierten Materials des ersten Dämmelementes und der Wand und/oder des expandierten Materials des zweiten Dämmelementes, gemessen in Richtung der Längsachse des Strukturelementes, mindestens 5 mm beträgt

In einer beispielhaften Weiterbildung beträgt die Distanz B mindestens 10 mm, insbesondere mindestens 20 mm, insbesondere mindestens 30 mm, und insbesondere mindestens 40 mm.

Je nach Anwendungsfall können die Distanz A und die Distanz B unterschiedlich ausgestaltet werden. Vorteilhafterweise haben die beiden Dämmelemente eine gewisse Mindestdistanz zueinander, damit zwischen den beiden Dämmelementen eine geschlossene Luftkammer entsteht, welche sich günstig auf die akustische Dämmung des Systems auswirkt.

In Versuchen hat sich weiterhin gezeigt, dass die akustische Dämmungsleistung nicht stark variiert mit einer veränderten Distanz zwischen den Dämmelementen. Somit kann die Distanz A zwischen den Dämmelementen auch an weitere Gegebenheiten einer Anwendung angepasst werden, ohne dass dabei auf wesentliche akustische Eigenschaften des Systems verzichtet werden muss.

In einer beispielhaften Ausführungsform verschliesst nur eines der Dämmelemente einen Querschnitt des Strukturelementes vollständig. Das zweite Dämmelement verschliesst in diesem Ausführungsbeispiel das Strukturelement nicht vollständig.

Eine solche Lösung hat den Vorteil, dass auch bei unregelmässig geformten Strukturelementen zwei gleich grosse, beziehungsweise zwei identische, Dämmelemente eingesetzt werden können, wobei die Dämmelemente nicht an allen Stellen des Strukturelementes eine vollständige Verschliessung des Querschnitts erzielen können. Solange zumindest eines der Dämmelemente einen Querschnitt des Strukturelementes vollständig verschliesst, kann eine gute akustische Dämmleistung des Gesamtsystems immer noch gewährleistet werden.
Ein Vorteil bei der Verwendung von zwei gleich grossen beziehungsweise zwei identischen Dämmelementen ist darin zu sehen, dass dadurch die Dämmelemente in grösserer Stückzahl hergestellt werden können, was Kostenvorteile mit sich bringt. Zudem ist dadurch eine Verwechslungsgefahr bei einer Manipulation der Teile verringert bzw. eliminiert.

In einem alternativen Ausführungsbeispiel verschliessen beide Dämmelemente jeweils einen Querschnitt des Strukturelementes vollständig.

In einer beispielhaften Ausführungsform umfasst das System weiterhin ein zusätzliches expandiertes Material, welches insbesondere direkt auf dem Strukturelement appliziert ist, wobei eines der Dämmelemente einen Querschnitt des Strukturelementes vollständig verschliesst, und wobei das andere Dämmelemente einen Querschnitt des Strukturelementes zusammen mit dem zusätzlichen expandierten Material vollständig verschliesst.

In einer beispielhaften Weiterbildung ist das zusätzliche expandierte Material ein zuvor auf das Strukturelement aufextrudiertes beziehungsweise aufgebrachtes expandiertes Material.

Das Vorsehen eines solchen zusätzlichen expandierbaren Materials hat den Vorteil, dass auch bei unregelmässig geformten Strukturelementen zwei gleiche Dämmelemente eingesetzt werden können, wobei eines der Dämmelemente, welches einen grösseren Querschnitt zu verschliessen hat, mit dem zusätzlichen expandierten Material ergänzt wird. Dadurch müssen keine zusätzlichen Teile produziert werden, und das System ist anpassbar auf unterschiedlichste Anwendungsfälle.

In einer beispielhaften Ausführungsform ist das System in einem elektrischen angetriebenen Kraftfahrzeug, insbesondere in einem Kraftfahrzeug ohne Verbrennungsmotor.

In einer beispielhaften Ausführungsform sind die Dämmelemente derart ausgerichtet, dass dasjenige Dämmelement, welches näher an einer Hauptschallquelle liegt, die mit dem expandierten Material bedeckte Seite der Wand von der Hauptschallquelle abgewendet hat.

Eine solche Ausrichtung der Dämmelemente hat den Vorteil, dass dadurch ein bestimmter Teil der Schallwellen von der Wand reflektiert wird. Dadurch kann eine akustische Dämmleistung des Systems weiter verbessert werden.

In einer beispielhaften Weiterbildung hat dasjenige Dämmelement, welches weiter weg von der Hauptschallquelle liegt, die mit expandiertem Material bedeckte Seite der Wand gegen die Hauptschallquelle hin ausgerichtet.

Eine solche Anordnung der Dämmelemente hat den Vorteil, dass dadurch die mit dem expandierten Material bedeckten Seiten der Wände der beiden Dämmelemente gegeneinander ausgerichtet sind. Es wurde beobachtet, dass dadurch eine besonders effiziente akustische Dämmleistung erreicht werden kann.

In einer beispielhaften Ausführungsform sind das erste Dämmelement und das zweite Dämmelement identisch ausgebildet.

Dies hat den Vorteil, dass dadurch höhere Stückzahlen produziert werden können, was insbesondere bei einer Verwendung eines Spritzgussverfahrens Kostenvorteile mit sich bringt.

In einer alternativen Ausführungsform sind das erste Dämmelement und das zweite Dämmelement achsensymmetrisch zueinander ausgebildet.

Dies hat den Vorteil, dass dadurch bei einer Verwendung des Systems auf einer linken Hälfte der Karosserie und auch auf einer rechten Hälfte der Karosserie bei unterschiedlichen Dämmelementen beide Seiten der Karosserie bestückt werden können. Es kann beispielsweise ein erstes Dämmelement auf der linken Seite der Karosserie nahe der Hauptschallquelle angeordnet werden, und dasselbe Dämmelement kann auf der rechten Seite der Karosserie entfernt der Hauptschallquelle angeordnet werden. Das zweite Dämmelement wird entsprechend auf der linken Seite der Karosserie entfernt an der Hauptschallquelle angeordnet, und auf der rechten Seite der Karosserie nahe der Hauptschallquelle angeordnet. Dadurch werden nur zwei und nicht vier unterschiedliche Dämmelemente benötigt.

In einer beispielhaften Ausführungsform hat das erste Dämmelement und/oder das zweite Dämmelement eine zweite Wand, wobei das expandierte Material zwischen den Wänden angeordnet ist.

Ein solch sandwichartiger Aufbau der Dämmelemente hat den Vorteil, dass durch die beiden Wände beidseitig des expandierten Materials eine Expansion des expandierten Materials zielgerichteter ausgestaltet werden kann, so dass ein besserer Verschluss von Querschnitten ermöglicht wird.

In einer beispielhaften Ausführungsform hat der Träger des ersten Dämmelementes einen Trägerfortsatz, welcher im Wesentlichen senkrecht zur Wand des Trägers ausgebildet ist, und an welchem das zweite Dämmelement angeordnet ist.

Eine solche Ausgestaltung der beiden Dämmelemente hat den Vorteil, dass die beiden Dämmelemente dadurch untereinander verbunden sind, wodurch eine Fixierung der Dämmelemente am Strukturelement vereinfacht wird.

In einer beispielhaften Ausführungsform sind das erste Dämmelement und das zweite Dämmelement jeweils durch ein Befestigungselement am Strukturelement fixiert.

In einer beispielhaften Ausführungsform hat jedes Dämmelement zwei Befestigungselemente am Strukturelement.

In einer beispielhaften Ausführungsform ist das Befestigungselement als Clip oder als Push-Pin ausgestaltet.

In einer alternativen Ausführungsform ist das Befestigungselement als Schweisslasche oder als Haken oder als Klebestreifen oder als magnetisches Element ausgestaltet.

In einer beispielhaften Ausführungsform bilden das erste Dämmelement und das zweite Dämmelement zusammen ein Befestigungselement, wobei die beiden Dämmelemente durch dieses gemeinsame Befestigungselement am Strukturelement fixiert sind.

Eine solche Lösung hat den Vorteil, dass beispielsweise beide Dämmelemente in einer Öffnung des Strukturelementes fixiert werden können.

In einer beispielhaften Ausführungsform sind das erste Dämmelement und das zweite Dämmelement an einer Tragstruktur angeordnet, wobei die Tragstruktur durch ein Befestigungselement am Strukturelement fixiert ist.

In einer beispielhaften Weiterbildung sind die Dämmelemente nicht einstückig mit der Tragstruktur ausgebildet.

In einer beispielhaften Weiterbildung sind die Dämmelemente durch eine reversible Befestigung an der Tragstruktur angeordnet.

In einer beispielhaften Weiterbildung sind die Dämmelemente dabei auf der Tragstruktur aufgesteckt.

Als expandierbares Material können grundsätzlich verschiedene Materialien eingesetzt werden, welche zur Schäumung gebracht werden können. Typischerweise wird das expandierbare Material thermisch, durch Feuchtigkeit oder durch elektromagnetische Strahlung zur Expansion gebracht.

Ein solches expandierbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate. Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA.
Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 250°C, insbesondere von 100°C bis 250°C, bevorzugt von 120°C bis 240°C, bevorzugt von 130°C bis 230°C schäumbar.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete expandierbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschrieben sind in EP 0 204 970.

Weiterhin eignen sich als expandierbare Materialien Treibmittel enthaltende zweikomponentige Epoxid/Polyurethan-Zusammensetzungen, wie sie beispielsweise beschrieben sind in WO 2005/080524 A1.

Weiterhin eignen sich als expandierbare Materialien Treibmittel enthaltende Ethylen-Vinyl-Acetat-Zusammensetzungen.

Ebenfalls geeignete expandierbare Materialien werden beispielsweise unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben. Solche expandierbaren Materialien sind für die vorliegende Erfindung besonders bevorzugt.

In einer beispielhaften Ausführungsform hat das expandierbare Material eine Expansionsrate von 800% bis 5000%, bevorzugt von 1000% bis 4000%, besonders bevorzugt von 1500% bis 3000%.

Expandierbare Materialien mit solchen Expansionsraten bieten den Vorteil, dass dadurch eine zuverlässige Abdichtung bzw. Dämmung des Strukturelementes gegen Flüssigkeiten und Schall erreicht werden kann.

In einer beispielhaften Ausführungsform ist das expandierbare Material als temperaturinduziertes Material ausgebildet.

Dies hat den Vorteil, dass dadurch der Ofen zur Einbrennung der Tauchlackierungsflüssigkeit benutzt werden kann, um das expandierbare Material zu expandieren und um dadurch den Hohlraum zu dämmen. Somit ist kein zusätzlicher Arbeitsschritt notwendig.

Der Träger kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie;
- Fig. 2a bis 4b: eine beispielhafte Darstellung eines gedämmten Strukturelementes;
- Fig. 5a bis 9b: beispielhafte Darstellungen verschiedener Dämmelemente.

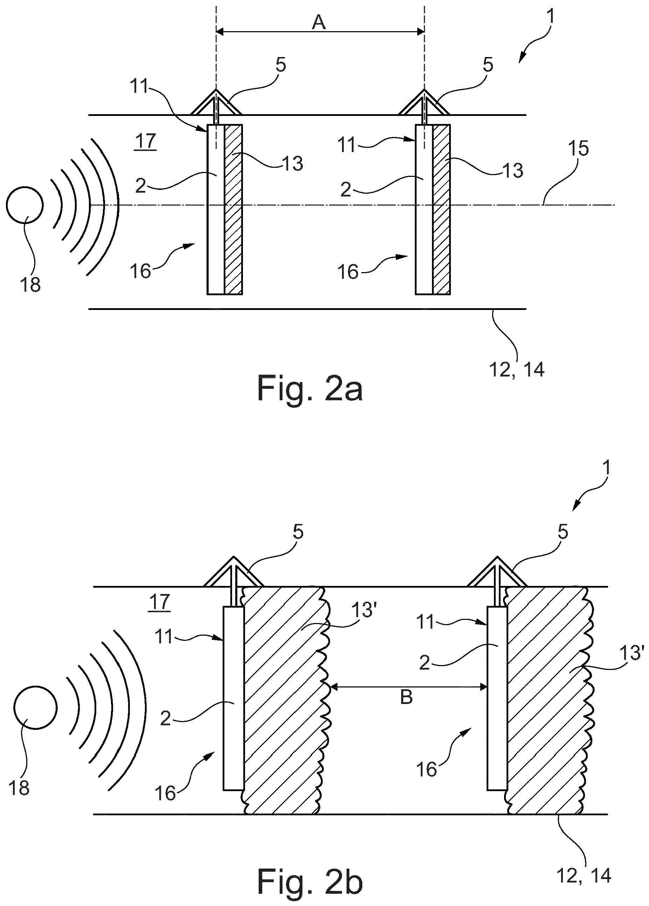

In den Fig. 2a bis 4b sind verschiedene Ausführungsbeispiele von Systemen 1 gedämmter Strukturelemente 12, 14 schematisch und beispielhaft dargestellt. Dabei sind die Systeme 1 jeweils in den Fig. 2a, 3a und 4a in einem Zustand dargestellt, in welchem das expandierbare Material 13 noch nicht expandiert ist, und in den Fig. 2b, 3b und 4b sind jeweils dieselben Systeme 1 dargestellt nach einer Expansion des expandierbaren Materials 13, so dass das expandierte Material 13' ersichtlich ist.

In den Fig. 2a und 2b ist ein erstes solches beispielhaftes System 1 dargestellt. In diesem Ausführungsbeispiel umfasst das System 1 zwei identisch ausgebildete Dämmelemente 16. Diese beiden Dämmelemente 16 sind in einem Hohlraum 17 des Strukturelementes 12, 14 angeordnet. Das Strukturelement 12, 14 hat eine Längsachse 15.

Die Dämmelemente 16 umfassen jeweils einen Träger 11, welcher in diesem Ausführungsbeispiel jeweils eine Wand 2 umfasst. Auf einer Seite dieser Wand 2 ist jeweils das expandierbare Material 13 beziehungsweise das expandierte Material 13' angeordnet. Dabei ist diese Seite der Wand 2 vollständig mit expandiertem Material 13' bedeckt. Die Dämmelemente 16 weisen zudem ein Befestigungselement 5 auf, welches in diesem Ausführungsbeispiel als Clip ausgebildet ist. Diese Clips sind jeweils durch Öffnungen im Strukturelement 12, 13 geführt, so dass die Dämmelemente 16 jeweils im Strukturelement 12, 14 fixiert sind. Zwischen der Wand 2 des ersten Dämmelementes 16 und der Wand 2 des zweiten Dämmelementes 16 ist eine Distanz A eingezeichnet. Zudem ist eine kürzeste Distanz B zwischen der Wand oder des expandierten Materials des ersten Dämmelementes und der Wand oder des expandierten Materials des zweiten Dämmelementes eingezeichnet. In diesem Ausführungsbeispiel ist die Distanz A grösser als die Distanz B.

Ausgehend von einer Hauptschallquelle 18 werden Luftschallwellen durch das Strukturelement 12, 14 geleitet. In diesem Ausführungsbeispiel sind die Dämmelemente 16 so ausgerichtet, dass jeweils diejenigen Seiten der Wände 2 gegen diese Hauptschallquelle 18 ausgerichtet sind, welche nicht mit expandiertem Material 13' bedeckt sind. Eine solche Ausrichtung der Dämmelemente 16 hat den Vorteil, dass dadurch ein gewisser Teil der Schallwellen bereits durch die Wand 2 des Trägers 11 reflektiert wird und somit eine akustische Dämmleistung des Gesamtsystems 1 erhöht.

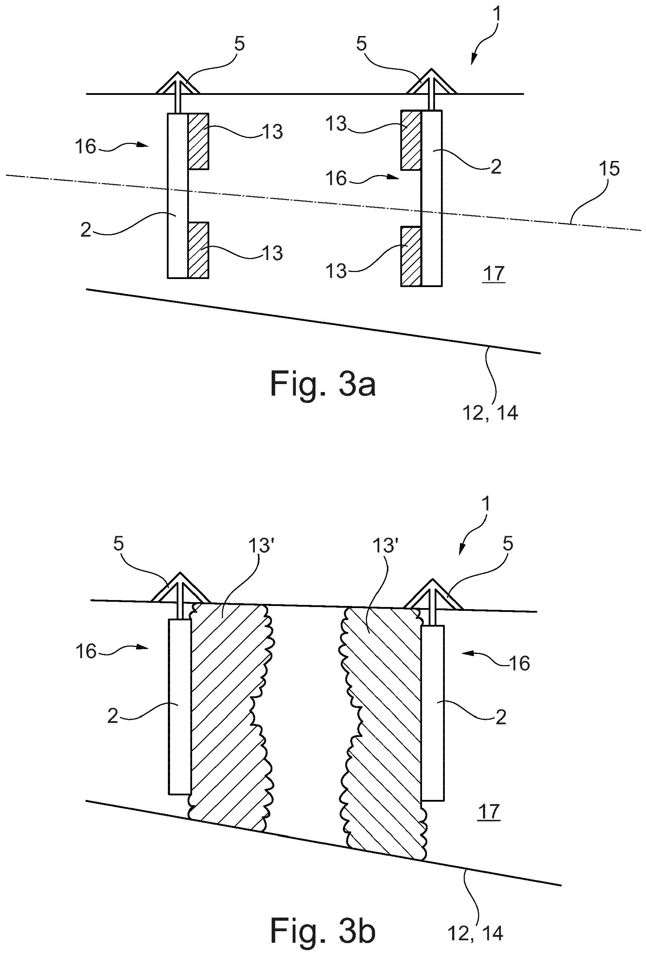

In den Fig. 3a und 3b ist ein weiteres Beispiel eines Systems 1 eines gedämmten Strukturelementes 12, 14 dargestellt. In diesem Ausführungsbeispiel ist das Strukturelement 12, 14 in Richtung der Längsachse 15 nicht mit einem konstanten Querschnitt ausgebildet. Dennoch werden auch in diesem Ausführungsbeispiel zwei identische Dämmelemente 16 eingesetzt. Durch die Expansion des expandierbaren Materials 13 kann in diesem Beispiel dennoch eine vollständige Verschliessung des Querschnitts durch beide Dämmelemente 16 erreicht werden.

In diesem Ausführungsbeispiel sind das erste Dämmelement 16 und das zweite Dämmelement 16 derart ausgerichtet, dass jeweils diejenigen Seiten der Wände 2, welche mit expandiertem Material 13 bedeckt sind, gegeneinander ausgerichtet sind.

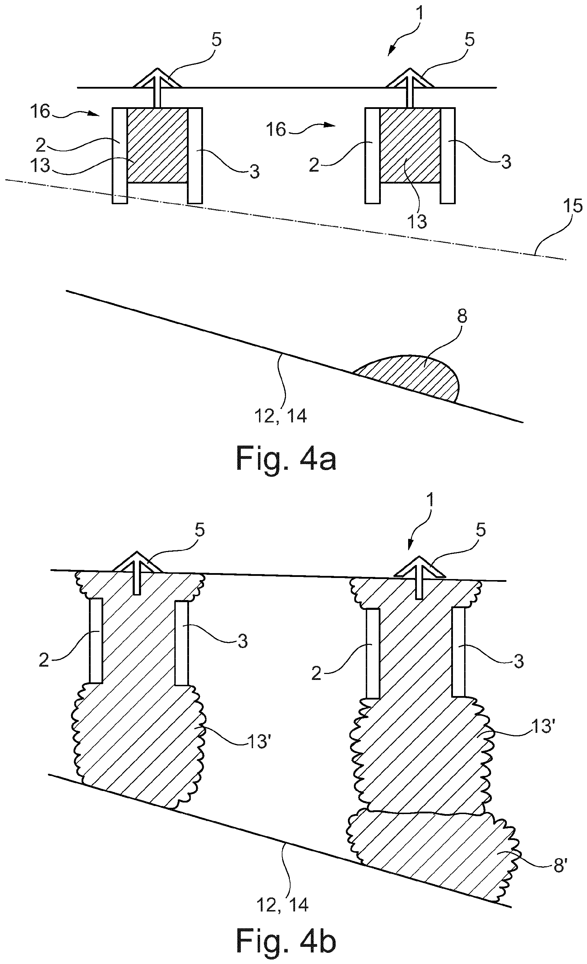

In den Fig. 4a und 4b ist ein weiteres Ausführungsbeispiel eines Systems 1 eines gedämmten Strukturelementes 12, 14 dargestellt. In diesem Ausführungsbeispiel ist eine Veränderung des Querschnitts entlang der Längsachse 15 des Strukturelementes 12, 14 noch stärker ausgeprägt als im Beispiel der Fig. 3a und 3b. In diesem Ausführungsbeispiel wird das System 1 ergänzt durch ein zusätzliches expandierbares Material 8 beziehungsweise ein zusätzliches expandiertes Material 8', welches zusammen mit einem der Dämmelemente 16 einen Querschnitt des Strukturelementes 12, 14 vollständig verschliesst.

Auch in diesem Beispiel werden zwei identische Dämmelemente 16 verwendet. Die Dämmelemente 16 haben dabei jeweils eine zweite Wand 3, wobei das expandierbare Material 13 beziehungsweise das expandierte Material 13' jeweils zwischen der Wand 2 und der zweiten Wand 3 angeordnet ist. Durch diese sandwichartige Bauweise der Dämmelemente 16 kann eine besonders effiziente Expansion des expandierbaren Materials 13 in Richtung der Wände des Strukturelementes 12, 14 erreicht werden.

In den Fig. 2a bis 4b sind jeweils Ausführungsbeispiele mit zwei identischen Dämmelementen 16 dargestellt. In alternativen, nicht dargestellten Ausführungsbeispielen werden jeweils zwei unterschiedliche Dämmelemente 16 verwendet. Dabei könnte beispielsweise eines der Dämmelemente 16 aus Fig. 2a und 2b mit einem der Dämmelementen 16 aus Fig. 4a und 4b kombiniert werden. Natürlich sind hier viele weitere Kombinationen möglich.

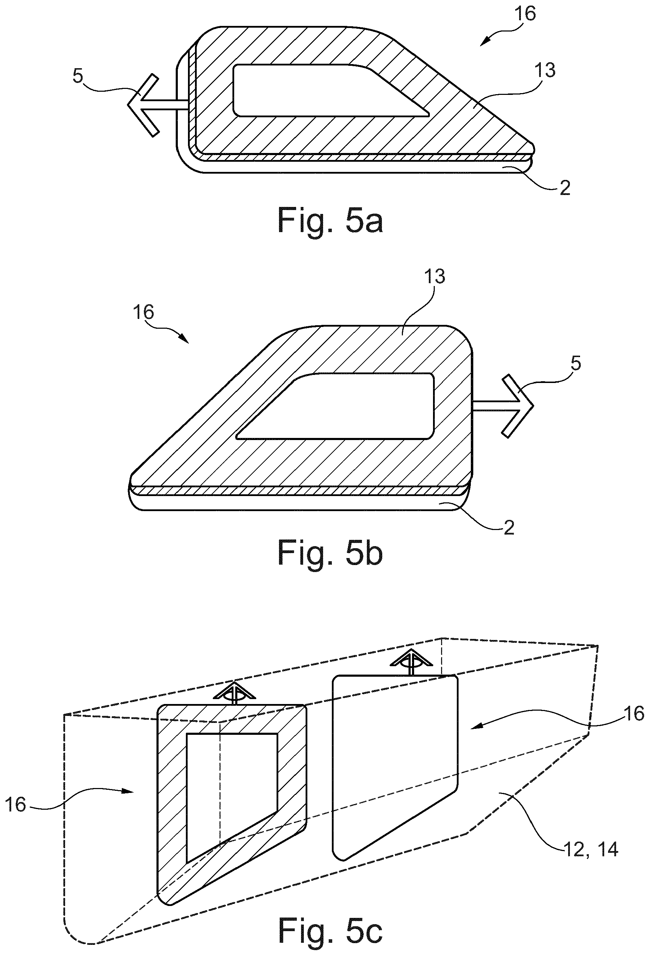

In den Fig. 5a bis 5c ist ein Ausführungsbeispiel von zwei Dämmelementen 16 dargestellt, welche achsensymmetrisch zueinander ausgebildet sind. In Fig. 5c ist ersichtlich, dass dabei die beiden Dämmelemente 16 unterschiedlich orientiert im Strukturelement 12, 14 angeordnet werden können. Auf einer zweiten Seite der Karosserie in einem entsprechenden achsensymmetrischen Strukturelement 12, 14 können dieselben Dämmelemente 16 verwendet werden, jedoch in anderer Reihenfolge.

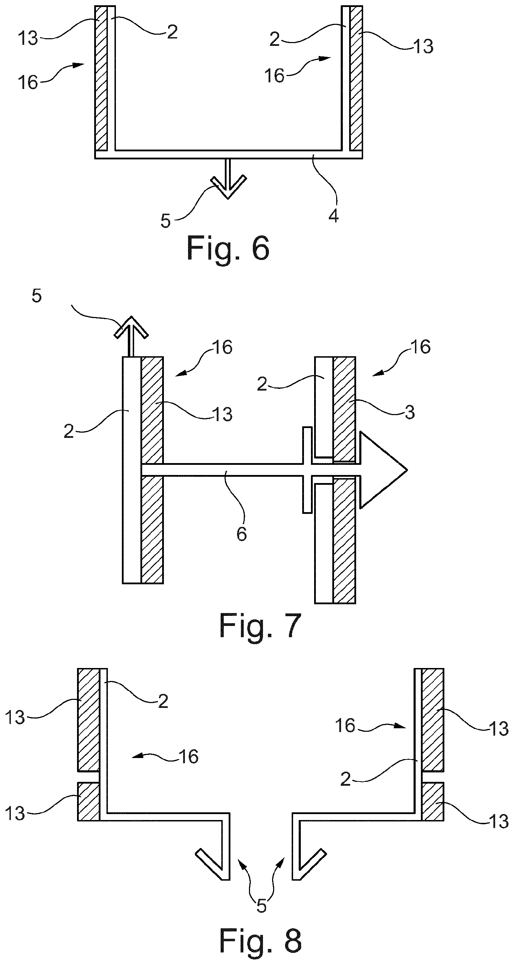

In Fig. 6 ist ein weiteres Ausführungsbeispiel der Dämmelemente 16 gezeigt. In diesem Ausführungsbeispiel sind das erste Dämmelement 16 und das zweite Dämmelement 16 beide auf einer gemeinsamen Tragstruktur 4 angeordnet. Dabei hat die Tragstruktur 4 ein Befestigungselement 5, so dass die Dämmelemente 16 kein eigenes Befestigungselement 5 zur Fixierung im Strukturelement mehr benötigen.

In Fig. 7 sind weitere beispielhafte Dämmelemente 16 dargestellt. In diesem Ausführungsbeispiel hat das erste Dämmelement 16 am Träger 11 einen Trägerfortsatz 6, welcher im Wesentlichen senkrecht zur Wand 2 ausgerichtet ist. An diesem Trägerfortsatz 6 ist nun das zweite Dämmelement 16 angeordnet. Zur Fixierung des zweiten Dämmelementes 16 am Trägerfortsatz 6 ist in diesem Ausführungsbeispiel eine clipartige Struktur vorgesehen. In diesem Ausführungsbeispiel hat lediglich das erste Dämmelement 16 ein Befestigungselement 5 zur Fixierung des Dämmelementes 16 im Strukturelement 12, 14, das zweite Dämmelement 16 wird dabei über das erste Dämmelement 16 am Strukturelement 12, 14 fixiert.

In Fig. 8 sind weitere beispielhafte Dämmelemente 16 dargestellt. In diesem Ausführungsbeispiel bilden die beiden Dämmelemente 16 zusammen ein Befestigungselement 5. Dadurch können beide Dämmelemente 16 in einer einzigen Öffnung des Strukturelementes 12, 14 fixiert werden.

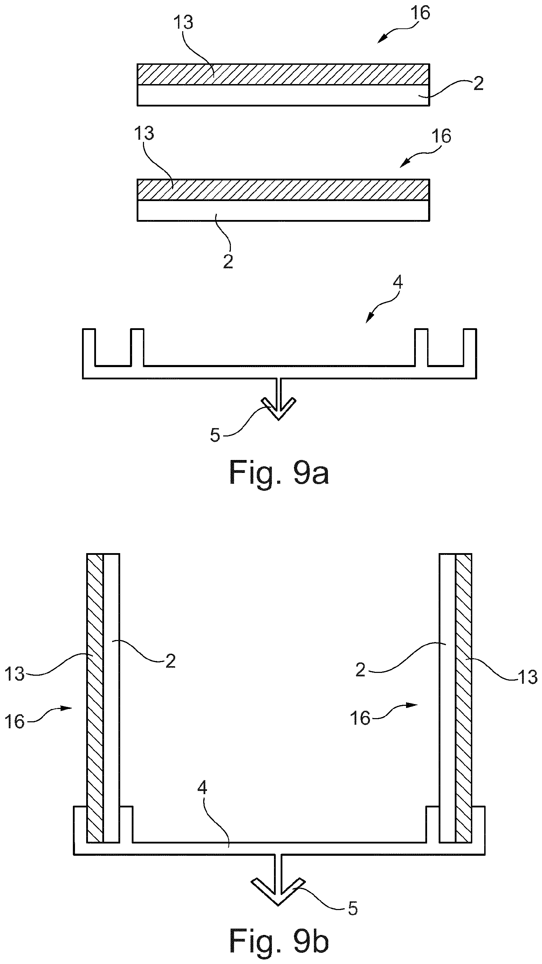

In den Fig. 9a und 9b sind weitere beispielhafte Dämmelemente 16 dargestellt. In diesem Ausführungsbeispiel werden das erste Dämmelement 16 und das zweite Dämmelement 16 auf einer Tragstruktur 4 reversibel befestigt. Dabei werden die Dämmelemente 16 jeweils in entsprechende Aufnahmestellen der Tragstruktur 4 gesteckt. Wiederum hat die gemeinsame Tragstruktur 4 ein Befestigungselement 5 zur Fixierung der Dämmelemente 16 am Strukturelement 12, 14.

### Bezugszeichenliste

- 1: System
- 2: Wand
- 3: zweite Wand
- 4: Tragstruktur
- 5: Befestigungselement
- 6: Trägerfortsatz
- 8: zusätzliches expandierbares Material
- 8': zusätzliches expandiertes Material
- 10: Karosserie
- 11: Träger
- 12: Strukturelement
- 13: expandierbares Material
- 13': expandiertes Material
- 14: Strukturelement
- 15: Längsachse
- 16: Dämmelement
- 17: Hohlraum
- 18: Hauptschallquelle

## Patentansprüche

1. System (1) eines gedämmten Strukturelementes (12, 14) in einem Kraftfahrzeug, das System (1) umfassend:
ein Strukturelement (12, 14), welches einen Hohlraum (17) bildet und welches sich entlang einer Längsachse (15) erstreckt;
ein erstes Dämmelement (16), welches zumindest einen Träger (11) und ein expandiertes Material (13') umfasst, wobei der Träger (11) zumindest eine Wand (2) umfasst, welche auf zumindest einer Seite vollständig mit expandiertem Material (13') bedeckt ist;
ein zweites Dämmelement (16), welches zumindest einen Träger (11) und ein expandiertes Material (13') umfasst, wobei der Träger (11) zumindest eine Wand (2) umfasst, welche auf zumindest einer Seite vollständig mit expandiertem Material (13') bedeckt ist;
wobei eine Distanz (A) zwischen der Wand (2) des ersten Dämmelementes (16) und der Wand (2) des zweiten Dämmelementes (16), gemessen in Richtung der Längsachse (15) des Strukturelementes (12, 14), höchstens 400 mm beträgt.

2. System (1) nach Anspruch 1, wobei eine kürzeste Distanz (B) zwischen der Wand (2) und/oder des expandierten Materials (13') des ersten Dämmelementes (16) und der Wand (2) und/oder des expandierten Materials (13') des zweiten Dämmelementes (16), gemessen in Richtung der Längsachse (15) des Strukturelementes (12, 14), mindestens 5 mm beträgt.

3. System (1) nach einem der vorhergehenden Ansprüche, wobei nur eines der Dämmelemente (16) einen Querschnitt des Strukturelementes (12, 14) vollständig verschliesst, oder wobei beide Dämmelemente (16) einen Querschnitt des Strukturelementes (12, 14) vollständig verschliessen.

4. System (1) nach einem der vorhergehenden Ansprüche, wobei das System (1) weiterhin ein zusätzliches expandiertes Material (8') umfasst, welches insbesondere direkt auf dem Strukturelement (12, 14) appliziert ist, wobei eines der Dämmelemente (16) einen Querschnitt des Strukturelementes (12, 14) vollständig verschliesst, und wobei das andere Dämmelement (16) einen Querschnitt des Strukturelementes (12, 14) zusammen mit dem zusätzlichen expandierten Material (8') vollständig verschliesst.

5. System (1) nach einem der vorhergehenden Ansprüche, wobei das System (1) in einem elektrisch angetriebenen Kraftfahrzeug ist, insbesondere in einem Kraftfahrzeug ohne Verbrennungsmotor.

6. System (1) nach einem der vorhergehenden Ansprüche, wobei die Dämmelemente (16) derart ausgerichtet sind, dass dasjenige Dämmelement (16), welches näher an einer Hauptschallquelle (18) liegt, die mit dem expandierten Material (13') bedeckte Seite der Wand (2) von der Hauptschallquelle (18) abgewendet hat.

7. System (1) nach Anspruch 6, wobei dasjenige Dämmelement (16), welches weiter weg von der Hauptschallquelle (18) liegt, die mit expandiertem Material (13') bedeckte Seite der Wand (2) gegen die Hauptschallquelle (18) hin ausgerichtet hat.

8. System (1) nach einem der vorhergehenden Ansprüche, wobei das erste Dämmelement (16) und das zweite Dämmelement (16) identisch ausgebildet sind.

9. System (1) nach einem der Ansprüche 1 bis 7, wobei das erste Dämmelement (16) und das zweite Dämmelement (16) achsensymmetrisch zueinander ausgebildet sind.

10. System (1) nach einem der Ansprüche 1 bis 8, wobei das erste Dämmelement (16) und/oder das zweite Dämmelement (16) eine zweite Wand (3) hat, wobei das expandierte Material (13') zwischen der Wand (2) und der zweiten Wand (3) angeordnet ist.

11. System (1) nach einem der Ansprüche 1 bis 7, wobei das erste Dämmelement (16) einen Trägerfortsatz (6) hat, welcher im Wesentlichen senkrecht zur Wand (2) ausgebildet ist, und an welchem das zweite Dämmelement (16) angeordnet ist.

12. System (1) nach einem der Ansprüche 1 bis 10, wobei das erste Dämmelement (16) und das zweite Dämmelement (16) jeweils durch ein Befestigungselement (5) am Strukturelement (12, 14) fixiert sind.

13. System (1) nach einem der Ansprüche 1 bis 9, wobei das erste Dämmelement (16) und das zweite Dämmelement (16) zusammen ein Befestigungselement (5) bilden, und durch dieses gemeinsame Befestigungselement (5) am Strukturelement (12, 14) fixiert sind.

14. System (1) nach einem der Ansprüche 1 bis 7, wobei das erste Dämmelement (16) und das zweite Dämmelement (16) an einer Tragstruktur (4) angeordnet sind, wobei die Tragstruktur (4) durch zumindest ein Befestigungselement (5) am Strukturelement (12, 14) fixiert ist.

15. System (1) nach Anspruch 14, wobei die Dämmelemente (16) nicht einstückig mit der Tragstruktur (4) ausgebildet sind, und wobei insbesondere die Dämmelemente (16) durch eine reversible Befestigung an der Tragstruktur (4) angeordnet sind.
